# EUROPÄISCHE PATENTSCHRIFT

(11) **EP 3 354 586 B1**
(45) Veröffentlichungstag und Bekanntmachung des Hinweises auf die Patenterteilung: **27.02.2019**
(21) Anmeldenummer: 18152941.3
(22) Anmeldetag: 23.01.2018
(51) Int. Cl.: B65D 19/18, B65D 21/08, F16B 5/06

(54) **TRANSPORTBEHÄLTER, INSBESONDERE PALETTENBEHÄLTER**
TRANSPORT CONTAINER, IN PARTICULAR PALLET CONTAINER
CONTENEUR DE TRANSPORT, EN PARTICULIER CONTENEUR-PALETTE

(30) Priorität: 31.01.2017 DE 102017101861
(43) Veröffentlichungstag der Anmeldung: 01.08.2018
(73) Patentinhaber: Infinex Holding GmbH, 72221 Haiterbach (DE)
(72) Erfinder: Hirmer, Thomas, 72221 Haiterbach (DE)
(74) Vertreter: Mammel und Maser

(56) Entgegenhaltungen:
- EP-A1- 2 727 854
- WO-A2-2004/043802
- DE-U1- 20 307 604
- GB-A- 2 103 752

## Beschreibung

Die Erfindung betrifft einen Transportbehälter, insbesondere Palettenbehälter, mit einem Boden, mit einem Deckel und mit zumindest einem dazwischen angeordneten Ring, der aus mehreren Seitenwänden gebildet ist.

Aus der DE 10 2016 200 846 A1 ist ein Profilelement für einen Transportbehälter bekannt. Dieses Profilelement dient zum Verbinden einer Palette mit wenigstens einem Ring, der mehrere Seitenwände umfasst beziehungsweise zum Verbinden von zwei übereinandergestapelten Ringen. Das Profilelement weist zwei einander gegenüberliegende U-förmige Aufnahmen auf. An einer Außenseite des Profilelementes ist eine gemeinsame Außenwand vorgesehen. Das Profilelement kann auf einen Palettenboden aufgesetzt werden, welcher Vorsprünge aufweist, die in die zweite U-förmige Aufnahme des Profilelements eingreifen. Gegenüberliegend kann die erste U-förmige Aufnahme eine Seitenwand des Ringes aufnehmen. Die einzelnen Komponenten sind nur aufeinander aufgesetzt. Eine Abhebesicherung ist nicht gegeben.

Aus der WO 2004/043802 A2 geht ein Profilelement für einen Transportbehälter hervor, welches zum Verbinden einer Palette mit wenigstens einem, mehrere Seitenwände umfassenden Ring sowie zum Verbinden von solchen übereinandergestapelten Ringen vorgesehen ist. Das Profilelement weist zwei einander gegenüberliegende rechteckige, U-förmige Aufnahmen auf, wobei in eine der beiden U-förmigen Aufnahmen Vorsprünge des Palettenbodens eingreifen und von der gegenüberliegenden U-förmigen Aufnahme ein Randabschnitt einer Seitenwand des Ringes aufgenommen ist. Dabei sind die einzelnen Komponenten aufeinander gesetzt.

Die DE 203 07 604 U1 offenbart ein Profilelement für einen Transportbehälter zum Übereinanderstapeln von mehreren Ringen, welche durch mehrere Seitenwände gebildet sind. Das Profilelement ist als umlaufender Rahmen ausgestaltet und weist zwei sich gegenüberliegende rechteckige, U-förmige Aufnahmen auf. In diese werden die übereinander liegenden Seitenwände der übereinander gestapelten Ringe eingesetzt.

Aus der EP 2 727 854 A1 ist ein Profilelement zur Ausrichtung und Fixierung übereinander gestapelter Transportbehälter bekannt. Dieses Profilelement ist als Eckverbindungselement ausgebildet, an dessen Schenkeln jeweils zwei sich gegenüberliegende rechteckige, U-förmige Aufnahmen zum Aufnehmen eines Randbereichs am Transportbehälter vorgesehen sind. In den U-förmigen Aufnahmen ist jeweils ein Vorsprung vorgesehen, der in eine korrespondierende Nut am Transportbehälter eingreift, um das Profilelement und den Transportbehälter zueinander zu positionieren.

Die GB 2 103 752 A beschreibt ein Eckverbindungsprofilelement für Möbel. Durch dieses Eckverbindungsprofilelement werden zwei Seitenwände dauerhaft miteinander verbunden.

Der Erfindung liegt die Aufgabe zugrunde, einen Transportbehälter, insbesondere Palettenbehälter, vorzuschlagen, welcher bezüglich des Transportvolumens flexibel und einfach in der Handhabung ist sowie eine sichere Anordnung der Komponenten des Palettenbehälters ermöglicht.

Diese Aufgabe wird durch einen Transportbehälter nach Anspruch 1 gelöst. Demnach ist zumindest ein Aufsteckprofilelement vorgesehen, welches eine erste und eine zweite U-förmige Aufnahme aufweist, die entgegengesetzt zueinander ausgerichtet sind, wobei die Aufnahmen des Aufsteckprofilelements zum formfesten Verbinden einer Seitenwand des Rings zum Boden und zum formfesten Verbinden der Seitenwand des ersten Ringes zur darüber liegenden Seitenwand des zweiten Ringes beim Übereinanderstapeln der Ringe ausgebildet sind, wobei die erste U-förmige Aufnahme des Aufsteckprofilelements einen die Aufstecköffnung umfassenden ersten erweiterten Bereich und daran anschließend einen zweiten verengten Bereich aufweist und wobei zumindest eine der beiden U-förmigen Aufnahmen ein Rastelement aufweist, welches mit einem an einer Stirnkante der Seitenwand angeordneten Rastelement verriegelbar ist. Ein solches Aufsteckprofilelement kann somit sowohl für die Aufnahme des ersten Ringes auf dem Boden verwendet werden als auch beim Vergrößern des Transportvolumens des Transportbehälters, indem zwei oder mehrere Ringe übereinander gestapelt und die Seitenwände miteinander verbunden werden. Die übereinander gestapelten Ringe können ebenfalls durch das Aufsteckprofil formfest miteinander verbunden werden. Eine solche Ausgestaltung des Aufsteckprofilelementes ermöglicht des Weiteren, dass die Ringe einerseits in einfacher Weise herstellbar sind und eine zusätzliche Montage der Aufsteckprofilelemente durch Kleben oder Schweißen an den Ringen oder dem Boden nicht erforderlich ist. Vielmehr kann das Aufsteckprofilelement durch eine einfache Aufsteckbewegung an der Seitenwand des Ringes und/oder am Boden befestigbar sein.

Zumindest eine der beiden U-förmigen Aufnahmen weist ein Rastelement auf, welches mit einem an einer Stirnkante der Seitenwand angeordneten komplementären Rastelement verriegelbar ist. Dadurch wird nach dem Aufsetzen an der Seitenwand auf das Aufsteckprofilelement die Seitenwand zum Aufsteckprofilelement gehalten. Darauffolgend kann eine erleichterte Handhabung für einen weiteren Zusammenbauschritt ermöglicht sein.

Bevorzugt ist an jeder Seitenwand zum formfesten Verbinden mit dem Boden oder mit einer weiteren Seitenwand ein Aufsteckprofilelement vorgesehen. Dadurch kann eine stabile Ausgestaltung des Transportbehälters geschaffen werden. Zudem kann eine variable Beladung des Transportbehälters ermöglicht sein, wobei die Ringe aus nur einer Höhe bestehen.

Die Seitenwand des Ringes ist bevorzugt zwischen deren Seitenkante durch eine obere und untere Stirnkante begrenzt, wobei das Aufsteckprofilelement an dieser Stirnkante angreift. Bevorzugt ist das Aufsteckprofilelement an die jeweilige Stirnkante der Seitenwand angepasst, so dass diese die Länge der Stirnkante aufweist oder kürzer als die Stirnkante ausgebildet ist. Dadurch kann quasi eine geschlossene Anordnung an einer Schnittstelle zum Boden oder zur benachbarten Seitenwand ermöglicht sein.

Vorteilhafterweise ist in der U-förmigen Aufnahme als Rastelement eine Rastnase ausgebildet, welche in eine bevorzugt ausgebildete Rastvertiefung an der Stirnkante der Seitenwand eingreift. Die Rastvertiefung ist bevorzugt an einem Seitenwandabschnitt der Stirnkante vorgesehen. Die Rastelemente liegen in einer Halteposition der Seitenwand zur U-förmigen Aufnahme bevorzugt einander gegenüber. Diese Vertiefung an der Stirnkante der Seitenwand, insbesondere einer in der Dicke verjüngten Stirnkante der Seitenwand, kann nutenförmig ausgebildet sein und vorzugsweise bei der Herstellung der Stirnkante eingebracht werden oder nachträglich beispielsweise eingefräst sein.

Bevorzugt ist der zweite verengte Bereich U-förmig und weist das Rastelement auf, welches bevorzugt seitlich in dem zweiten verengten Bereich vorgesehen ist. Sofern das Rastelement als Rastnase ausgebildet ist, kann dieses seitlich in den verengten Bereich der Aufnahme ragen. Sofern das Rastelement als Vertiefung ausgebildet ist, kann dieses seitlich den verengten Bereich über die Höhe der Vertiefung erweitern. Dies ermöglicht eine einfache Integration des Rastelementes in der ersten U-förmigen Aufnahme des Aufsteckprofilelements. Zudem ist bei dieser Anordnung das Rastelement vor Beschädigungen geschützt.

Des Weiteren ist bevorzugt zwischen dem ersten erweiterten Bereich und dem zweiten verengten Bereich der ersten U-förmigen Aufnahme des Aufsteckprofilelements im Übergangsbereich einseitig eine verlaufende Kontur vorgesehen, welche einem Übergangsbereich zwischen der verengten Stirnkante der Seitenwand zu einem flächigen Abschnitt der Seitenwand entspricht. Dadurch kann eine zusätzliche Abstützung der Seitenwand bei der Positionierung und Anordnung in der ersten U-förmigen Aufnahme des Aufsteckprofilelementes ermöglicht sein. Diese Anordnung ermöglicht eine erhöhte Belastbarkeit und Tragkraft für den Transportbehälter.

Durch eine Aufsteckbewegung des Aufsteckprofilelementes auf die Stirnkante des Ringes ist das Aufsteckprofilelement bevorzugt an der Stirnkante in einfacher Weise verriegelbar. Dies ermöglicht eine einfache Befestigung. Ein Kleben oder Schweißen des Profilelementes an die Seitenwand ist nicht erforderlich und vereinfacht die Herstellung.

Die Seitenwand des Transportbehälters ist bevorzugt aus einer mehrschichtigen Platte, wie beispielsweise einer Zwei- oder Dreischicht-Platte, ausgebildet. Solche Seitenwände können als Hohlkammer-Platte oder als sogenannte Triplex-Platte ausgebildet sein. Die an der Seitenwand ausgebildete Stirnkante ist gegenüber einem flächigen Abschnitt der Seitenwand in der Dicke verringert oder verjüngt. Dadurch kann zum einen die mehrschichtige Platte an der Stirnkante geschlossen sein. Zum anderen kann dadurch ein verbessertes Angreifen und Aufsetzen des Aufsteckprofilelements an der Stirnkante der Seitenwand gegeben sein.

Die Stirnkante der Seitenwand ist bevorzugt durch eine Wärmeumformung gebildet und vorzugsweise in der Dicke verringert. Die Seitenkante kann mittig zur Seitenwand ausgerichtet sein oder zur Außenseite der Seitenwand bündig verlaufen, so dass eine Außenseite der Seitenkante in der Verlängerung der Außenseite der Seitenwand liegt. Die letzte Ausführungsform ist besonders vorteilhaft, da dadurch die Verdickung einer Schnittstelle von zwei übereinander liegenden Ringen verhindert sein kann.

Des Weiteren sind die bündig zur Außenseite der Seitenwand ausgebildete obere und untere Stirnkante der Seitenwand wechselseitig ausgerichtet. Dadurch wird in einfacher Weise ein Übereinanderstapeln von mehreren Ringen ermöglicht.

Die einander gegenüberliegend ausgerichteten U-förmigen Aufnahmen des Aufsteckprofilelements sind bereichsweise parallel zueinander versetzt und teilweise überlappend in Bezug auf den Boden der Aufnahmen angeordnet. Dadurch kann eine Schnittstelle geschaffen werden, welche eine drucksteife Anordnung von übereinander gestapelten Ringen ermöglicht, indem die Seitenwände der zueinander gestapelten Ringe quasi fluchtend zueinander ausgerichtet sind.

Bevorzugt sind beim Stapeln von zwei Ringen übereinander die bündig zur Außenseite der Seitenwand verlaufenden Stirnkanten spiegelbildlich in den Aufnahmen des Aufnahmeprofilelements angeordnet. Dadurch sind die Stirnkanten an der Schnittstelle zwischen den zwei Ringen teilweise überlappend zueinander ausgerichtet und vorzugsweise jeweils mit deren Außenseite fluchtend zur Außenseite der gegenüberliegenden Seitenwand ausgerichtet.

Eine der U-förmigen Aufnahmen des Aufnahmeprofilelements ist bevorzugt im Querschnitt an die Profilform der Stirnkante der Seitenwand und vorzugsweise eines Übergangsbereichs in dem flächigen Abschnitt der Seitenwand angepasst. Dadurch kann eine formschlüssige Aufnahme zwischen der Seitenwand und dem Aufnahmeprofilelement ermöglicht sein, wodurch eine erhöhte Festigkeit erzielt wird.

Die Aufnahme des Aufnahmeprofilelements, welche der an die Profilform der Seitenkante der Seitenwand angepassten Aufnahmen gegenüberliegt, umfasst vorzugsweise eine U-förmige Aufnahme mit einem rechteckigen Querschnitt, an welchem sich eine Außenwand anschließt, die sich entgegen der Aufsteckrichtung der rechteckigen U-förmigen Aufnahme über diese hinaus erstreckt und in entgegengesetzter Richtung einen Schenkel der gegenüberliegenden Aufnahme bildet. Dadurch ist diese rechteckig ausgebildete U-förmige Aufnahme sowohl für die Anordnung am Boden zum formfesten Verbinden als auch zum Aufstecken auf die Stirnseite der Seitenwand des weiteren Ringes geeignet. Darüber hinaus kann durch die Außenwand an dem Aufsteckprofilelement bevorzugt eine vergrößerte Abstützfläche zum Anliegen der zueinander verbindenden Komponenten gegeben sein.

Bevorzugt sind an der U-förmigen Aufnahme mit rechteckigem Querschnitt vorzugsweise benachbart zu deren Aufnahmeöffnungen beidseitig angrenzend Abstützflächen vorgesehen. Dies dienen insbesondere zur verbesserten Kraftaufnahme des Aufsteckprofilelements am Boden.

Vorteilhafterweise ist das Aufsteckprofilelement aus Kunststoff hergestellt. Dieses Aufnahmeprofilelement kann extrudiert sein oder als Strangpressprofilelement hergestellt werden.

Des Weiteren weist bevorzugt der Boden des Transportbehälters eine Auflagefläche, vorzugsweise eine geschlossene Auflagefläche, auf. Im äußeren Randbereich der Auflagefläche sind Erhöhungen vorgesehen, welche zum formfesten Verbinden des zumindest einen Aufsteckprofilelements zum Boden in die rechteckige U-förmige Aufnahme des Aufsteckprofilelements eingreifen. Diese Erhöhungen sind vorteilhafterweise stegförmig ausgebildet und können sich abschnittsweise entlang dem jeweiligen Randbereich erstrecken und sind zumindest im Eckbereich des Bodens angeordnet.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines Transportbehälters,
- Figur 2: eine perspektivische Ansicht eines Transportbehälters mit einem Boden und einem darauf angeordneten Ring bestehend aus Seitenwänden,
- Figur 3: eine schematische Schnittansicht entlang der Linie II-II in Figur 3 zur Darstellung eines Querschnitts eines Aufsteckprofilelements,
- Figur 4: eine schematische Schnittansicht einer Seitenwand,
- Figur 5: eine perspektivische Ansicht auf eine Auflagefläche des Bodens,
- Figur 6: eine schematische Schnittansicht eines Aufsteckprofilelements zum formfesten Verbinden einer Seitenwand mit einem Boden, und
- Figur 7: eine schematische Schnittansicht eines Aufsteckprofilelements zum formfesten Verbinden von zwei übereinander angeordneten Seitenwänden.

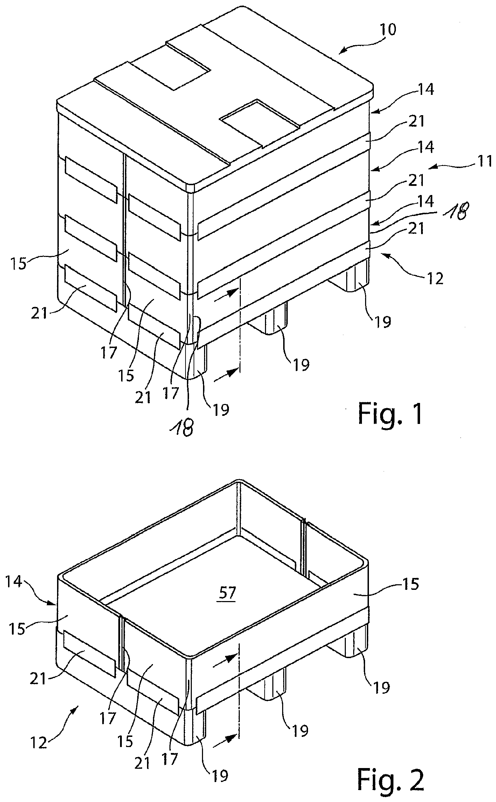

In Figur 1 ist perspektivisch ein Transportbehälter 11 dargestellt. Dieser Transportbehälter 11 umfasst einen Boden 12 und zumindest einen Ring 14, der aus mehreren Seitenwänden 15 besteht sowie einen Deckel 16. Der Ring 14 umfasst zwei einander gegenüberliegende Seitenwände 15, die eine Längsseite bilden. Die Schmalseiten des Transportbehälters 11 sind beispielsweise jeweils durch zwei Seitenwände 15 gebildet. Die Seitenwände 15 sind an deren vertikal ausgerichteten Seitenkanten 18 vorteilhafterweise durch Gelenke 17, insbesondere Filmscharniere, miteinander verbunden. Alternativ kann eine Steckverbindung vorgesehen sein, die auch zwei Seitenwände 15 lösbar miteinander verbinden kann. Zwischen den Seitenkanten 18 ist die Seitenwand 15 durch eine obere und untere Stirnkante 23 begrenzt. Eine solche Anordnung weist den Vorteil auf, dass dieser Ring 14 beispielsweise durch eine sogenannte M-Faltung zusammenlegbar ist.

Der Boden 12 ist bevorzugt als Palette mit Füßen 19 ausgebildet. Der Deckel 16 weist bevorzugt eine Oberseite mit Vertiefungen 20 auf, die zur Lagefixierung von Füßen 19 eines darauf angeordneten Bodens 12 eines weiteren Transportbehälters 11 dienen. Durch diese Vertiefungen 20 werden die Füße 19 des darauf aufliegenden Bodens eines weiteren Transportbehälters 11 gesichert.

Der Transportbehälter 11 besteht bevorzugt aus einem recycelfähigen Kunststoff. Der Boden 12 und/oder der Deckel 16 können bevorzugt nach einem sogenannten Twinsheet-Verfahren hergestellt sein. Die Seitenwände 15 können mehrschichtig aufgebaut sein. Bevorzugt sind zwei- oder dreischichtige Kunststoffplatten, insbesondere Hohlkammer-Platten oder sogenannte Triplex-Platten, vorgesehen. Die Gelenke 17 werden bevorzugt in diese mehrschichtigen Kunststoffplatten eingebracht, wodurch einzelne aneinandergereihte Seitenwände 15 gebildet werden.

Der Transportbehälter 11 gemäß Figur 1 umfasst beispielsweise drei Ringe 14, die übereinandergestapelt sind. Die Ringe 14 werden durch Aufsteckprofilelemente 21 zueinander positioniert. An jeder Seitenwand 15 des Ringes 14 ist zumindest ein Aufsteckprofilelement 21 positioniert und nimmt eine gegenüberliegende Seitenwand 15 des Ringes 14 auf. Dieses Aufsteckprofilelement 21 positioniert auch den unmittelbar auf dem Boden 12 aufliegenden Ring 14, so dass die Seitenwände 15 des Ringes 14 zum Boden 12 positioniert sind. Das Aufsteckprofilelement 21 dient zum formfesten Verbinden des Rings 14 zum Boden 12 sowie zum formfesten Verbinden der darüber gestapelten Ringe 14. Durch die Anzahl der übereinander gestapelten Ringe 14 kann das Transportvolumen des Transportbehälters 11 verändert werden. Eine modulare Vergrößerung des Transportvolumens für einen solchen Transportbehälter 11 ist durch die Aufsteckprofilelemente 21 möglich. Diese Aufsteckprofilelemente 21 weisen den Vorteil auf, wie nachfolgend noch beschrieben sein wird, dass diese das Übereinanderstapeln von mehreren Ringen 14 ermöglichen, ohne dass Zwischenböden erforderlich sind, welche sich horizontal entlang der Trennebene zwischen zwei Ringen erstrecken. Darüber hinaus bleibt die Funktion der Zusammenlegbarkeit, insbesondere einer M-Faltung, der Ringe 14 erhalten.

In Figur 2 ist eine perspektivische Ansicht des Transportbehälters 11 dargestellt, bei welcher ein erster Ring 14 auf dem Boden 12 aufgesetzt ist. Dieser erste Ring 14 ist durch die Aufsteckprofilelemente 21 formfest zum Boden 12 verbunden. Die Seitenwände 15 sind durch die Gelenke 17 oder eine Steckverbindung begrenzt. Die Aufsteckprofilelemente 21 erstrecken sich vorzugsweise entlang einer Stirnkante 23 am oberen und unteren Ende der Seitenwand 15. Die Stirnkanten 23 erstrecken sich somit zwischen zwei Gelenken 17 und begrenzen die Seitenwand 15 in deren Höhe. Bevorzugt sind die Aufsteckprofilelemente 21 etwas kürzer als die Länge der Stirnkanten 23 ausgebildet.

Auf der Schmalseite des Transportbehälters 11, welche durch zwei Seitenwände 15 beispielhaft gebildet ist, sind zwei Aufsteckelemente 21 vorgesehen, so dass jede Seitenwand 15 wiederum zum Boden 12 formfest mit einem Aufsteckprofilelement 21 verbunden ist. Analoges gilt für einen darüber liegenden Ring 14, wie dies auch aus Figur 1 ersichtlich ist.

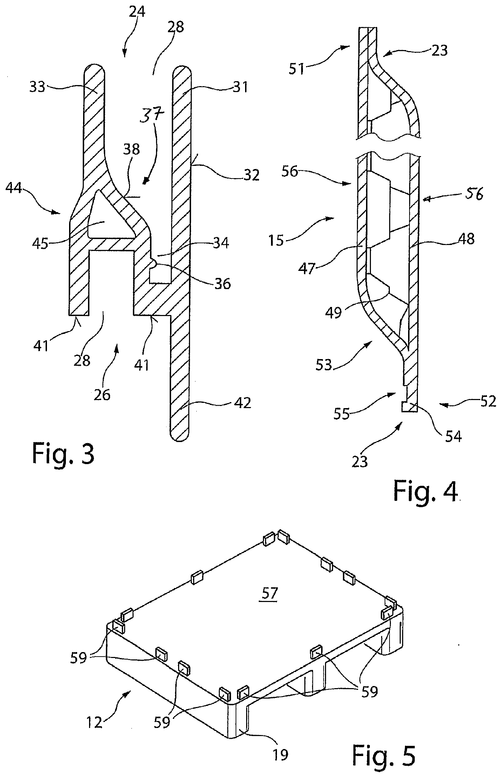

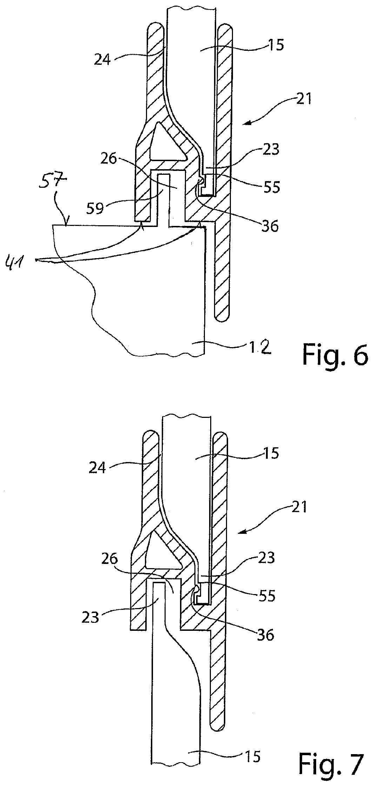

Figur 3 zeigt eine schematische Schnittansicht des Aufsteckprofilelements 21 entlang der Linie II-II in Figur 2. Die möglichen Anbindungen der Anbauteile zum formfesten Verbinden durch das Aufsteckprofilelement 21 sind nachfolgend in den Figuren 6 und 7 näher erörtert.

Das Aufsteckprofilelement 21 weist eine erste U-förmige Aufnahme 24 und eine zweite U-förmige Aufnahme 26 auf. Jede dieser Aufnahmen 24, 26 umfasst eine Aufstecköffnung 28. Diese Aufstecköffnungen 28 der ersten und zweiten U-förmigen Aufnahme 24, 26 sind einander gegenüberliegend ausgerichtet. Die erste U-förmige Aufnahme 24 weist einen Schenkel 31 auf, der Teil einer Außenwand 32 des Aufsteckprofilelements 21 ist. Gegenüberliegend ist ein zweiter Schenkel 33 vorgesehen, der sich parallel zum Schenkel 31 erstreckt und auf gleicher Höhe die Aufstecköffnung 28 begrenzt. Diese erste U-förmige Aufnahme 24 ist im Querschnitt bevorzugt an die Stirnkante 23 einer Seitenwand 15 angepasst, wie diese beispielsweise in Figur 4 dargestellt ist. Die U-förmige Aufnahme 24 weist einen verengten Bereich 34 auf, in dem bevorzugt ein Rastelement 36 vorgesehen ist. Dieses Rastelement 36 ist bevorzugt hervorstehend ausgebildet und ragt vorzugsweise seitlich in den verjüngten Bereich 34 hinein. An dem verjüngten Bereich 34 anschließend ist ein erweiterter Bereich 37 vorgesehen, der dem geradlinig ausgebildeten Schenkel 31 gegenüberliegend eine Kontur 38 umfasst, welcher an den Verlauf einer komplementären Kontur der Seitenwand 15 angepasst sein kann. Die Kontur 38 ist bevorzugt gerundet oder sinusförmig.

Parallel versetzt zur ersten Aufnahme 24 ist die zweite Aufnahme 26 vorgesehen. Die zweite Aufnahme 26 ist um 180° gedreht beziehungsweis entgegengesetzt zur ersten Aufnahme 24 ausgerichtet. Diese erste Aufnahme 24 und zweite Aufnahme 26 sind auch teilweise überlappend in Bezug auf den Boden der Aufnahme 24, 26 zueinander angeordnet. Die zweite Aufnahme 26 weist eine rechteckige, U-förmige Aufnahme 24 auf. Am jeweiligen Ende der Aufstecköffnung 28 der zweiten Aufnahme 26 sind Abstützflächen 41 vorgesehen. An eine der beiden Abstützflächen 41 angrenzend erstreckt sich ein weiterer Schenkel 42, der in Verlängerung zum Schenkel 31 ausgebildet ist und einen Teil der Außenwand 32 bildet.

In einem Übergangsabschnitt 44 zwischen der U-förmigen Aufnahme 26 zum Schenkel 33 beziehungsweise zur ersten U-förmigen Aufnahme 24 kann ein Hohlraum 45 ausgebildet sein. Dieser Hohlraum 45 ist vorteilhafterweise dann ausgebildet, wenn dieses Aufsteckprofilelement 21 als Strangpressprofil ausgebildet ist. Sofern das Aufsteckprofilelement 21 durch Extrusion hergestellt wird, kann dieser Hohlraum 45 auch entfallen.

In Figur 4 ist eine schematische Schnittansicht entlang einer Seitenwand 15 dargestellt. Diese Seitenwand 15 besteht beispielsweise aus zwei äußeren Kunststoffschichten 47, 48, zwischen denen eine dritte Kunststoffschicht 49 ausgebildet ist. Hierbei kann es sich um eine Noppenfolie oder dergleichen handeln, die ein- oder beidseitig ausgeformte Erhöhungen oder Vertiefungen aufweist. Diese Kunststoffschichten 47, 48, 49 sind miteinander verschweißt. Die Seitenwand 15 weist am oberen Ende 51 und am unteren Ende 52 jeweils eine Stirnkante 23 auf. Diese Stirnkante 23 ist bevorzugt in der Dicke gegenüber der Wandstärke der Seitenwand 15 verjüngt. Die Stirnkante 23 kann durch eine Wärmeumformung hergestellt werden, indem die äußeren Kunststoffschichten 47, 48 zusammengepresst werden. Dadurch entsteht ein stegförmiger Abschnitt 54, der steif ausgebildet ist und vorzugsweise die Seitenkante 23 bildet. Der stegförmige Abschnitt 54 schließt die Seitenwände 15 oben und unten. Die Dicke des stegförmigen Abschnitts 54 wird durch die Stärke der Kunststoffschichten 43, 44, 49 und der Presskraft bestimmt. Bevorzugt ist eine Außenseite der Stirnkante bündig zu einem flächigen Abschnitt 56 der Seitenwand 15 ausgerichtet. Diese stegförmigen Abschnitte 54 zur Bildung der Stirnkante 23 sind wechselseitig zum flächigen Abschnitt 56 der Seitenwand 15 ausgerichtet, der sich zwischen den Stirnkanten 23 erstreckt. Dieser flächige Abschnitt 56 weist bevorzugt die ursprüngliche Plattenstärke der Seitenwände 15 auf. Dadurch ist in einfacher Weise durch das Aufsteckprofilelement 24 ein Aufeinanderstapeln von mehreren Ringen 14 ermöglicht. Am unteren Ende 52 der Stirnkante 23 ist ein Rastelement 55 vorgesehen. Dieses Rastelement 55 ist beispielsweise als Vertiefung ausgebildet. Dieses Rastelement 55 ist bevorzugt an einer Außenseite oder einer Innenseite der Stirnkante 23 oder beidseitig vorgesehen. Ein solches Rastelement 55 kann gleichzeitig bei der Herstellung der Stirnkante 23 am unteren Ende 52 erfolgen. Das Rastelement 55 ist an die Form und/oder Kontur des Rastelementes 36 angepasst. Nach dem Einführen der Stirnkante 23 erfolgt am unteren Ende 52 der Seitenwand 15 in die Aufnahme 24 eine Verrastung zwischen dem Aufsteckprofilelement 21 und der Seitenwand 15. Vorteilhafterweise ist diese Verrastung auch wieder lösbar.

Die Stirnkante 23 am oberen Ende 51 der Seitenwand 15 kann ohne Rastelement 55 ausgebildet sein. Alternativ kann dieses Rastelement 55 auch am oberen Ende 51 der Seitenwand 15 eingebracht werden.

In Figur 5 ist eine perspektivische Ansicht des Bodens 12 dargestellt. Dieser Boden 12 umfasst eine Auflagefläche 57, welche bevorzugt vollständig geschlossen ausgebildet ist. Ebenso ist diese Auflagefläche 57 bevorzugt eben ausgebildet. Alternativ können auch Profilierungen oder Vertiefungen zur formschlüssigen Positionierung und Aufnahme von Gegenständen vorgesehen sein. Auf der Auflagefläche 57 sind im äußeren Randbereich des Bodens 12 Erhöhungen 59 vorgesehen. Diese Erhöhungen 59 erstrecken sich abschnittsweise entlang einer Längsseite und einer Schmalseite des Bodens 12. Diese können sich auch durchgehend entlang der Längsseite und/oder Schmalseite erstrecken. Diese Erhöhungen 59 sind stegförmig ausgebildet und bevorzugt im Querschnitt gesehen rechteckförmig ausgebildet. Dabei weisen diese Erhöhungen 59 eine Querschnittskontur auf, die zur Positionierung in der zweiten Aufnahme 26 des Aufsteckprofilelements 21 angepasst sind. Für jedes Aufsteckprofilelement 21 sind bevorzugt zwei mit Abstand zueinander angeordnete Erhöhungen 59 vorgesehen, die jeweils nahe dem jeweiligen Endbereich des Aufsteckprofilelements 21 angeordnet sind. Daraus resultiert die Anordnung der Erhöhungen 59 an der Schmalseite des Bodens 12. Der Schmalseite des Bodens 12 sind zwei Seitenwände 15 zugeordnet. Dadurch sind zumindest vier Erhöhungen 59 vorgesehen und vorzugsweise entlang einer Mittelachse zwei Erhöhungen 59 benachbart zueinander ausgerichtet. Somit kann das eine Aufsteckprofilelement 21 durch die beiden rechten Erhöhungen 59 und das weitere Aufsteckprofilelement 21 durch die beiden linken Erhöhungen 59 formfest gehalten werden. Entlang der Längsseite des Bodens 12 können zur Stabilisierung des Aufsteckprofilelements 21 zusätzlich zur Erhöhung 55 im jeweiligen Endbereich eine mittlere Erhöhung 59 oder auch mehrere mittlere Erhöhungen vorgesehen sein.

In Figur 6 ist eine schematische Schnittansicht des Aufsteckprofilelements 21 dargestellt. Bei diesem Ausführungsbeispiel ist die Seitenwand 15 durch das Aufsteckprofilelement 21 formfest zum Boden 12 verbunden.

Der Querschnitt der ersten U-förmigen Aufnahme 24 ist an das untere Ende 52 der Seitenwand 15 angepasst. Die Stirnkante 23 wird durch den verengten Bereich 34 aufgenommen. Bevorzugt ist in dem verengten Bereich 34 der Aufnahme 24 das Rastelement 36 vorgesehen. Ein Übergangsbereich 53 von der Stirnkante 23 zum flächigen Abschnitt 56 der Seitenwand 15 entspricht der Kontur 38 der Aufnahme 24. Die Schenkel 31, 33 sind im Abstand an die Dicke der Seitenwand 15 angepasst. Dadurch kann ein unteres Ende 52 formfest mit dem Aufsteckprofilelement 21 verbunden sein. Dies ermöglicht eine hohe Kraftübertragung.

Das Aufsteckprofilelement 21 umgreift mit der zweiten Aufnahme 26 die Erhöhung 59 des Bodens 12. Bevorzugt weist dabei die Erhöhung 59 eine geringere Höhe als die Tiefe der U-förmigen Aufnahme 26 auf. Dadurch können sich die zur Aufnahmeöffnung 28 benachbart angeordneten Abstützflächen 41 auf der Auflagefläche 57 des Bodens 12 abstützen. Dies führt wiederum zu einer erhöhten Kraftübertragung. Der Schenkel 42 erstreckt sich seitlich an einer Außenseite des Bodens 12 gegenüber der Aufstandsfläche 57 nach unten. Der Abstand des Schenkels 42 zur zweiten Aufnahme 26 ist in Abhängigkeit der Positionierung der Erhöhung 59 zum Rand des Bodens 12 angepasst, so dass ein Anliegen des Schenkels 42 an einer Außenseite des Bodens 12 gegeben ist.

Des Weiteren können an der Aufnahme 24 zwei einander gegenüberliegende Rastelemente 36 vorgesehen sein. Diese können auf gleicher Höhe oder in der Höhe versetzt zueinander sein. An einer Innenseite und/oder an einer Außenseite der Stirnkante 23 der Seitenwand 15 kann ein Rastelement 55 vorgesehen sein. Auch dadurch kann eine lösbare Rastverbindung geschaffen werden. Die Rastelemente 36 in der Aufnahme 24 können bevorzugt im verengten Bereich 34 vorgesehen sein. Alternativ können diese auch im erweiterten Bereich 37 vorgesehen sein. Ebenso kann ein Rastelement 36 im verengten Bereich 34 und ein Rastelement 36 im erweiterten Bereich 37 der Aufnahme 24 vorgesehen sein. Die komplementären Rastelemente 55 an der Seitenwand sind entsprechend in der Höhe und Lage eingebracht.

Analoges gilt für die zweite Aufnahme 26, wobei nur ein U-förmiger Bereich vorgesehen ist, sodass die beiden einander gegenüberliegenden Rastelemente 36 in diesem einen Bereich angeordnet sein können. An einer Innen- und/oder Außenseite der Seitenkante 23 können dann wieder entsprechend das oder komplementären Rastelemente 55 vorgesehen sein.

In Figur 7 ist eine schematische Schnittansicht des Aufsteckprofilelements 21 dargestellt, welches zwei übereinander angeordnete Seitenwände 15 miteinander verbindet. Die obere Seitenwand 15 ist wiederum verrastend in der ersten Aufnahme 24 des Aufsteckprofilelements 21 angeordnet. Die untere Seitenwand 15 greift mit der Stirnkante 23 am oberen Ende 51 der Seitenwand 15 in die zweite Aufnahme 26 ein. Gleichzeitig liegt eine Außenseite der Seitenwand 15 am Schenkel 42 des Aufsteckprofilelements 21 an. Dadurch wird wiederum eine formfeste Verbindung zwischen den beiden übereinander gestapelten Seitenwänden 15 geschaffen.

Durch die spiegelbildliche Anordnung der Stirnkanten 23 am oberen Ende 51 und unteren Ende 52 der Seitenwände 15 können diese beim Übereinanderstapeln von mehreren Ringen 14 einander gegenüberliegend teilweise überlappend ausgerichtet werden, wodurch eine hohe Steifigkeit erzielt wird. Gleichzeitig ist ersichtlich, dass das Aufsteckprofilelement 21 die einander zugeordneten Seitenwände 15 entlang den Stirnkanten 23 ausrichtet und positioniert, so dass die sich quer durch den Innenraum des Transportbehälters 11 erstreckenden Zwischenböden zur Aussteifung entbehrlich sind.

Es versteht sich, dass die Rastnase 36 und Vertiefung 55 auch vertauscht sein können, das heißt, dass die Rastnase an der Stirnkante der Seitenwand und die Vertiefung in der Aufnahme vorgesehen ist. Auch können an einer Außenseite der Stirnkante eine Rastnase und an der gegenüberliegenden Außenseite derselben Stirnkante eine Vertiefung vorgesehen sein. Auch können an den beiden Außenseiten der Stirnkante der Seitenwand einander gegenüberliegende Rastnasen oder einander gegenüberliegende Vertiefungen vorgesehen sein. Die komplementären Rastelemente sind entsprechend ausgebildet.

## Patentansprüche

1. Transportbehälter (11), insbesondere Palettenbehälter, mit einem Boden (12), mit einem Deckel (16) und mit zumindest einem dazwischen angeordneten ersten Ring (14), der aus mehreren Seitenwänden (15) gebildet ist, wobei der erste Ring (14) auf den Boden (12) und der Deckel (16) auf den ersten Ring (14) aufsetzbar ist, mit zumindest einem Aufsteckprofilelement (21) mit einer ersten und einer zweiten U-förmigen Aufnahme (24, 26), die jeweils eine einseitige Aufstecköffnung (28) aufweisen, welche entgegengesetzt zueinander ausgerichtet sind und die erste und zweite U-förmige Aufnahme (24, 26) des Aufsteckprofilelements (21) zum formfesten Verbinden einer Seitenwand (15) des ersten Ringes (14) mit dem Boden (12) und zum formfesten Verbinden der Seitenwand (15) des ersten Ringes (14) zur gegenüberliegenden darüber liegenden Seitenwand (15) des eines zweiten Ringes (14) beim Übereinanderstapeln des ersten und zweiten Ringes (14) ausgebildet sind, **dadurch gekennzeichnet,**
- **dass** die erste U-förmige Aufnahme (24) des Aufsteckprofilelements (21) einen die Aufstecköffnung (28) umfassenden ersten erweiterten Bereich (37) und daran anschließend einen zweiten verengten Bereich (34) aufweist und
- **dass** zumindest eine der beiden U-förmigen Aufnahmen (24, 26) ein Rastelement (36) aufweist, welches mit einem an einer Stirnkante (23) der Seitenwand (15) angeordneten Rastelement (55) verriegelbar ist.

2. Behälter nach Anspruch 1, **dadurch gekennzeichnet, dass** an jeder Seitenwand (15) zum formfesten Verbinden zum Boden (12) oder zum formfesten Verbinden mit einer weiteren Seitenwand (15) ein Aufsteckprofilelement (21) vorgesehen ist.

3. Behälter nach Anspruch 1 oder 2, **dadurch gekennzeichnet, dass** die Seitenwand (15) jedes Ringes (14) zwischen deren Seitenkanten (18) durch eine obere und untere Stirnkante (23) begrenzt ist und das Aufsteckprofilelement (21) an der Stirnkante (23) angreift und gleich lang oder kürzer als die Stirnkante (23) ausgebildet ist.

4. Behälter nach einem der vorhergehenden Ansprüche, **dadurch gekennzeichnet, dass** das an zumindest einer Aufnahme (24, 26) vorgesehene Rastelement (36) als Rastnase und das an der Seitenwand (15) angeordnete Rastelement (55) als Rastvertiefung ausgebildet ist.

5. Behälter nach einem der vorhergehenden Ansprüche, **dadurch gekennzeichnet, dass** das Rastelement (36) seitlich in dem verengten Bereich (34) vorgesehen ist.

6. Behälter nach Anspruch 1, **dadurch gekennzeichnet, dass** zwischen dem verengten Bereich (34) und dem erweiterten Bereich (37) der ersten U-förmigen Aufnahme (24) des Aufsteckprofilelementes (21) einseitig eine Kontur (38) als Übergang vorgesehen ist, welche einem Übergangsbereich (53) zwischen einer Innenseite der Stirnkante (23) der Seitenwand (15) zu einem flächigen Abschnitt (56) der Seitenwand (15) entspricht und vorzugsweise die Kontur einen sinusförmigen Verlauf aufweist.

7. Behälter nach einem der vorhergehenden Ansprüche, **dadurch gekennzeichnet, dass** die Seitenwand (15) aus einer mehrschichtigen Platte, insbesondere Hohlkammerplatte oder Dreischicht-Platte, besteht und die obere und untere Stirnkante (23) der Seitenwand (15) gegenüber einem sich dazwischen erstreckenden, flächigen Abschnitt (56) der Seitenwand (15) in der Dicke verringert ist.

8. Behälter nach einem der vorhergehenden Ansprüche, **dadurch gekennzeichnet, dass** die Stirnkante (23) der Seitenwand (15) durch eine Wärmeumformung gebildet und insbesondere in der Dicke verjüngt ist und dass die Stirnkante (23) mittig zur Dicke der Seitenwand (15) ausgerichtet oder zur Außenseite der Seitenwand (15) ausgerichtet ist, so dass ein Wandabschnitt der Stirnkante (23) in der Verlängerung eines flächigen Abschnitts (56) der Seitenwand (15) liegt und vorzugsweise die jeweils bündig zur Außenseite der Seitenwand (15) ausgebildete Stirnkante (23) am oberen und unteren Ende (51, 52) der Seitenwand (15) wechselseitig zueinander ausgerichtet ist.

9. Behälter nach einem der vorhergehenden Ansprüche, **dadurch gekennzeichnet, dass** die zweite U-förmige Aufnahme (26) der entgegengesetzt am Aufsteckprofilelement (21) ausgerichteten U-förmigen Aufnahmen (24, 26) bereichsweise parallel versetzt zur ersten U-förmigen Aufnahme (24) vorgesehen ist und die erste U-förmige Aufnahme (24) und die zweite U-förmige Aufnahme (26) teilweise überlappend in Bezug auf den Boden der U-förmigen Aufnahmen (24, 26) zueinander angeordnet sind.

10. Behälter nach einem der vorhergehenden Ansprüche, **dadurch gekennzeichnet, dass** beim Stapeln von zwei Ringen (14) übereinander die bündig zur Außenseite der Seitenwand (15) verlaufenden Stirnkanten (23) spiegelbildlich in der ersten und zweiten U-förmigen Aufnahme (24, 26) des Aufsteckprofilelements (21) angeordnet sind.

11. Behälter nach einem der vorhergehenden Ansprüche, **dadurch gekennzeichnet, dass** eine der Aufnahmen (24, 26) des Aufsteckprofilelements (21) zumindest an die Profilform der Stirnkante (23) der Seitenwand (15) angepasst und vorzugsweise das Rastelement (36) in der Aufnahme (24, 26) angeformt ist.

12. Behälter nach Anspruch 11, **dadurch gekennzeichnet, dass** die zweite Aufnahme (26), welche der ersten Aufnahme (24) gegenüberliegt, und die vorzugsweise an die Profilform der Stirnkante (23) der Seitenwand (15) angepasst ist, eine rechteckige, U-förmige Aufnahme (26) ausbildet, an welcher sich vorzugsweise ein Schenkel (42) anschließt, der einem Schenkel (31) der ersten U-förmigen Aufnahme (24) gegenüberliegt und eine gemeinsame Außenwand (32) bildet, die sich über eine Schnittstelle zwischen dem Boden (12) und dem ersten Ring (14) oder zwischen zwei übereinander angeordneten Ringen (14) erstreckt.

13. Behälter nach Anspruch 12, **dadurch gekennzeichnet, dass** an der zweiten, rechteckigen und U-förmigen Aufnahme (26) benachbart zu deren Aufstecköffnung (28) beidseits angrenzend Abstützflächen (41) vorgesehen sind.

14. Behälter nach einem der vorhergehenden Ansprüche, **dadurch gekennzeichnet, dass** das Aufsteckprofilelement (21) durch Extrusion oder als Strangpressprofil hergestellt ist.

15. Behälter nach einem der vorhergehenden Ansprüche, **dadurch gekennzeichnet, dass** der Boden (12) eine Auflagefläche (57), vorzugsweise vollflächige Auflagefläche (57), aufweist und im äußeren Randbereich der Auflagefläche (57) Erhöhungen (59) vorgesehen sind, welche zum formfesten Verbinden des Aufsteckprofilelements (21) mit dem Boden (12) in die zweite U-förmige Aufnahme (26) des Aufsteckprofilelements (21) eingreifen.

## Claims

1. A transport container (11), in particular a pallet container, including a base (12), a cover (16), and at least one first ring (14) disposed therebetween and formed of a plurality of side walls (15), with the first ring (14) fittable onto the base (12) and the cover (16) fittable onto the first ring (14), further including at least one plug-on profiled element (21) with a first and a second U-shaped retainer (24, 26) each of which is provided with a plug-on opening (28) oriented in such a manner as to face away from each other, said first and second U-shaped retainers (24, 26) of the plug-on profiled element (21) being designed for rigidly assembling a side wall (15) of the first ring (14) to the base (12) and for rigidly assembling the side wall (15) of the first ring (14) to the side wall (15) of a second ring (14) placed on top of it when said first and second rings (14) are stacked on top of each other, **characterised in that**
- the first U-shaped retainer (24) of the plug-on profiled element (21) has an enlarged first section (37) comprising the plug-on opening (28) and, adjacent thereto, a narrowed second section (34), and
- at least one of the two U-shaped retainers (24, 26) has a snap-lock element (36) which is interlockable with a snap-lock element (55) arranged on a front edge (23) of the side wall (15) .

2. The container as claimed in claim 1, **characterised in that** a plug-on profiled element (21) is provided on each side wall (15) for rigidly assembling the latter to the base (12) or for rigidly assembling it to another side wall (15).

3. The container as claimed in claim 1 or 2, **characterised in that** the side wall (15) of each ring (14) is delimited, between its lateral edges (18), by an upper and a lower front edge (23) and **in that** the plug-on profiled element (21) is applied to said front edge (23) and is of equal length as, or shorter than, the front edge (23).

4. The container as claimed in any of the preceding claims, **characterised in that** the snap-lock element (36) provided on at least one retainer (24, 26) is realised as a snap-on nose and **in that** the snap-lock element (55) provided on the side wall (15) is realised as a snap-fit recess.

5. The container as claimed in any of the preceding claims, **characterised in that** the snap-lock element (36) is provided laterally in the narrowed section (34) .

6. The container as claimed in claim 1, **characterised in that** between the narrowed section (34) and the enlarged section (37) of the first U-shaped retainer (24) of the plug-on profiled element (21) a contour (38) is provided on one side which forms a transition and corresponds to a contoured section (53) between an inner surface of the front edge (23) of the side wall (15) and a planar portion (56) of the side wall (15), and **in that** said contour preferably has a sinusoidal shape.

7. The container as claimed in any of the preceding claims, **characterised in that** the side wall (15) consists of a multilayer panel, in particular of a hollow structured panel or a three-layer panel, and **in that** the upper and the lower front edges (23) of the side wall (15) are reduced in thickness with respect to a planar portion (56) of the side wall (15) extending therebetween.

8. The container as claimed in any of the preceding claims, **characterised in that** the front edge (23) of the side wall (15) is formed, in particular reduced in thickness, by a hot-forming process and **in that** said front edge (23) is centrally oriented with respect to the thickness of the side wall (15) or is oriented so as to be flush with respect to the outer surface of the side wall (15), such that a wall portion of the front edge (23) extends in the prolongation of a planar portion (56) of the side wall (15) and **in that** preferably the front edge (23) realised flush with the outer surface of the side wall (15) is oriented in such a manner as to be disposed on opposite sides on the upper and on the lower end (51, 52) of the side wall (15).

9. The container as claimed in any of the preceding claims, **characterised in that** the second U-shaped retainer (26) of the U-shaped retainers (24, 26) that are oriented in opposite directions on the plug-on profiled element (21) is designed to extend parallel to and, in a certain region offset from, the first U-shaped retainer (24) and **in that** the first U-shaped retainer (24) and the second U-shaped retainer (26) are disposed in an overlapping manner as far as the bottoms of the U-shaped retainers (24, 26) are concerned.

10. The container as claimed in any of the preceding claims, **characterised in that** when two rings (14) are stacked on top of each other, the front edges (23) extending flush with the outer surface of the side wall (15) are disposed respectively in a mirror-inverted manner in the first and in the second U-shaped retainer (24, 26) of the plug-on profiled element (21).

11. The container as claimed in any of the preceding claims, **characterised in that** one of the retainers (24, 26) of the plug-on profiled element (21) is at least adapted to the profile shape of the front edge (23) of the side wall (15) and **in that** preferably the snap-lock element (36) is integrally formed in the retainer (24, 26).

12. The container as claimed in claim 11, **characterised in that** the second retainer (26) which is opposed to the first retainer (24) and is preferably adapted to the profile shape of the front edge (23) of the side wall (15) forms a rectangular, U-shaped retainer (26) which is preferably prolonged by a leg (42) that is opposed to a leg (31) of the first U-shaped retainer (24) and forms a common outer wall (32) extending over an interface between the base (12) and the first ring (14) or between two rings (14) disposed on top of each other.

13. The container as claimed in claim 12, **characterised in that** the second rectangular and U-shaped retainer (26) has support surfaces (41) arranged adjacent to its plug-on opening (28) on both sides thereof.

14. The container as claimed in any of the preceding claims, **characterised in that** the plug-on profiled element (21) is formed by extrusion or as an extruded profile.

15. The container as claimed in any of the preceding claims, **characterised in that** the base (12) has a support surface (57), preferably a support surface (57) extending over the entire surface thereof, and **in that** on the outer periphery of said support surface (57) ridges (59) are provided which engage with the second U-shaped retainer (26) of the plug-on profiled element (21) for rigidly assembling the plug-on profiled element (21) with the base (12).

## Revendications

1. Récipient de transport (11), en particulier récipient-palette, pourvu d'un fond (12), d'un couvercle (16) et, disposé entre ceux-ci, d'au moins un premier anneau (14) qui est formé par plusieurs parois latérales (15), le premier anneau (14) pouvant être placé sur le fond (12) et le couvercle (16) pouvant être placé sur ledit premier anneau (14), pourvu d'au moins un élément profilé emboîtable (21) pourvu d'une première et d'une deuxième réception (24, 26) en forme de U lesquelles présentent respectivement, sur un côté, une ouverture emboîtable (28), lesquelles ouvertures sont orientées à l'opposé l'une de l'autre, et la première et la deuxième réception (24, 26) en forme de U de l'élément profilé emboîtable (21) étant formées pour assembler de manière indéformable une paroi latérale (15) du premier anneau (14) au fond (12) et pour assembler de manière indéformable la paroi latérale (15) du premier anneau (14) à la paroi latérale (15) sus-jacente d'un deuxième anneau (14) lorsque ledit premier et ledit deuxième anneau (14) sont posés l'un sur l'autre, **caractérisé en ce que**
- la première réception (24) en forme de U de l'élément profilé emboîtable (21) présente une première zone élargie (37) comprenant l'ouverture emboîtable (28) et une deuxième zone rétrécie (34) qui lui est attenante et
- au moins une des deux réceptions (24, 26) en forme de U présente un élément d'enclenchement (36) qui peut être verrouillé avec un élément d'enclenchement (55) disposé sur une arête frontale (23) de la paroi latérale (15).

2. Récipient selon la revendication 1, **caractérisé en ce que** sur chaque paroi latérale (15) est prévu un élément profilé emboîtable (21) en vue d'assembler celle-ci de manière indéformable au fond (12) ou en vue d'assembler celle-ci de manière indéformable à une autre paroi latérale (15).

3. Récipient selon la revendication 1 ou 2, **caractérisé en ce que** la paroi latérale (15) de chaque anneau (14) est délimitée, entre ses deux arêtes latérales (18), par respectivement une arête frontale (23) supérieure et inférieure, et **en ce que** l'élément profilé emboîtable (21) repose contre l'arête frontale (23) et est formé de manière à être aussi long ou plus court que ladite arête frontale (23).

4. Récipient selon l'une quelconque des revendications précédentes, **caractérisé en ce que** l'élément d'enclenchement (36) prévu sur au moins une réception (24, 26) est réalisé en tant qu'ergot d'arrêt et que l'élément d'enclenchement (55) disposé sur la paroi latérale (15) est réalisé en tant qu'évidement d'enclenchement.

5. Récipient selon l'une quelconque des revendications précédentes, **caractérisé en ce que** l'élément d'enclenchement (36) est prévu latéralement dans la zone rétrécie (34).

6. Récipient selon la revendication 1, **caractérisé en ce qu'**entre la zone rétrécie (34) et la zone élargie (37) de la première réception (24) en forme de U de l'élément profilé emboîtable (21) est prévu, sur un côté, un contour (38) faisant office de transition, lequel correspond à une zone de transition (53) située entre un côté intérieur de l'arête frontale (23) de la paroi latérale (15) et une partie plane (56) de ladite paroi latérale (15) et **en ce que** ledit contour présente de préférence un tracé sinusoïdal.

7. Récipient selon l'une quelconque des revendications précédentes, **caractérisé en ce que** la paroi latérale (15) est constituée d'une plaque multicouche, en particulier d'une plaque alvéolaire ou d'une plaque à trois couches, et **en ce que** les arêtes frontales (23), supérieure et inférieure, de la paroi latérale (15) présentent une épaisseur réduite par rapport à une partie plane (56) de la paroi latérale (15) située entre celles-ci.

8. Récipient selon l'une quelconque des revendications précédentes, **caractérisé en ce que** l'arête frontale (23) de la paroi latérale (15) est réalisée par un formage à chaud et s'amincit en particulier en épaisseur, et **en ce que** l'arête frontale (23) est orientée de manière centrale par rapport à l'épaisseur de la paroi latérale (15) ou est orientée vers le côté extérieur de la paroi latérale (15) de telle sorte qu'une partie de paroi de l'arête frontale (23) se situe dans le prolongement d'une partie plane (56) de la paroi latérale (15) et **en ce que** de préférence les arêtes frontales (23) réalisées respectivement au niveau des extrémités supérieure et inférieure (51, 52) de la paroi latérale (15) de manière à être sur le même plan que le côté extérieur de ladite paroi latérale (15) sont orientées de manière à faire pendant l'une à l'autre.

9. Récipient selon l'une quelconque des revendications précédentes, **caractérisé en ce que** la deuxième réception (26) en forme de U des deux réceptions (24, 26) en forme de U orientées l'une à l'opposé de l'autre sur l'élément profilé emboîtable (21) est décalée en partie de manière parallèle à la première réception (24) en forme de U et **en ce que** la première réception (24) en forme de U et la deuxième réception (26) en forme de U sont disposées l'une par rapport à l'autre de manière à ce que les fonds desdites réceptions (24, 26) en forme de U se chevauchent en partie.

10. Récipient selon l'une quelconque des revendications précédentes, **caractérisé en ce que** les arêtes frontales (23) s'étendant sur le même plan que le côté extérieur de la paroi latérale (15) sont disposées en symétrie miroir dans la première et la deuxième réception (24, 26) en forme de U de l'élément profilé emboîtable (21) lorsque deux anneaux (14) sont placés l'un sur l'autre.

11. Récipient selon l'une quelconque des revendications précédentes, **caractérisé en ce qu'**une des réceptions (24, 26) de l'élément profilé emboîtable (21) est adaptée au moins à la forme profilée de l'arête frontale (23) de la paroi latérale (15) et que l'élément d'enclenchement (36) est de préférence formé dans la réception (24, 26).

12. Récipient selon la revendication 11, **caractérisé en ce que** la deuxième réception (26) qui est située à l'opposé de la première réception (24) et qui est de préférence adaptée à la forme profilée de l'arête frontale (23) de la paroi latérale (15) forme une réception (26) en U de forme rectangulaire à laquelle est contiguë de préférence une branche (42) qui est située à l'opposé d'une branche (31) de la première réception (24) en forme de U et forme une paroi extérieure (32) commune qui s'étend sur une intersection entre le fond (12) et le premier anneau (14) ou entre deux anneaux (14) disposés l'un sur l'autre.

13. Récipient selon la revendication 12, **caractérisé en ce que** des surfaces de support (41) sont prévues au niveau de la deuxième réception (26) en U de forme rectangulaire, de manière contiguë à son ouverture emboîtable (28), et ce de part et d'autre de celle-ci.

14. Récipient selon l'une quelconque des revendications précédentes, **caractérisé en ce que** l'élément profilé emboîtable (21) est réalisé par extrusion ou en tant que profil filé.

15. Récipient selon l'une quelconque des revendications précédentes, **caractérisé en ce que** le fond (12) présente une surface d'appui (57), de préférence une surface d'appui (57) intégrale, et **en ce que** dans la zone périphérique extérieure de la surface d'appui (57) sont prévues des saillies (59) qui entrent en prise avec la deuxième réception (26) en forme de U de l'élément profilé emboîtable (21) afin d'assembler de manière indéformable l'élément profilé emboîtable (21) au fond (12).
